(19) Europäisches Patentamt
European Patent Office
Office européen des brevets

(11) Numéro de publication: **0 338 911**
**A1**

(12) # DEMANDE DE BREVET EUROPEEN

(21) Numéro de dépôt: **89401062.8**

(22) Date de dépôt: **18.04.89**

(51) Int. Cl.⁴: **C 09 K 11/01**

(30) Priorité: **22.04.88 FR 8805346**

(43) Date de publication de la demande:
**25.10.89 Bulletin 89/43**

(84) Etats contractants désignés: **DE ES GB IT NL**

(71) Demandeur: **VIDEOCOLOR**
**7, boulevard Romain-Rolland**
**F-92128 Montrouge (FR)**

(72) Inventeur: **Patel, Himanshu**
**THOMSON-CSF SCPI - Cedex 67**
**F-92045 Paris La Defense (FR)**

**Pezzulo, Antimo**
**THOMSON-CSF SCPI - Cedex 67**
**F-92045 Paris La Defense (FR)**

(74) Mandataire: **Chaverneff, Vladimir et al**
**THOMSON-CSF SCPI**
**F-92045 PARIS LA DEFENSE CEDEX 67 (FR)**

(54) **Procédé de récupération de phosphores de tubes de télévision en couleurs.**

(57) Selon la présente invention, pour pouvoir récupérer le maximum de phosphores recueillis lors de la fabrication de dalles de tubes de télévision en couleurs, on rompt les chaînes de polymères organiques à l'aide d'un oxydant tel que l'acide periodique.

FIG. 6

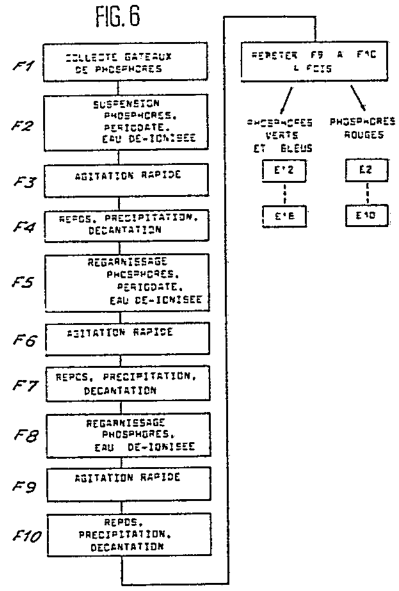


EP 0 338 911 A1

## Description

## PROCEDE DE RECUPERATION DE PHOSPHORES DE TUBES DE TELEVISION EN COULEURS

La présente invention se rapporte à un procédé de récupération de phosphores de tubes de télévision en couleurs.

Pour réaliser le revêtement en phosphores de la dalle d'un tube cathodique trichrome on a la plupart du temps recours à la méthode de la bouillie. Les phosphores en excès sont normalement recueillis dans une centrifugeuse à partir de révélateurs et de cuves contenant de l'eau. La bouillie de phosphores qui s'égoutte des dalles placées dans un dispositif de chauffage par rayonnement est desséchée et brûlée en partie. Cette bouillie comporte des particules organiques et des chromates en proportion vingt à cent fois plus élevée que dans les phosphores recueillies dans la centrifugeuse. Le procédé normalement employé pour purifier ces phosphores conduit à une perte d'efficacité des phosphores et même peut les rendre inutilisables à cause d'une forte contamination en matériaux organiques. Un tel procédé de récupération permet de récupérer environ 10 à 15 % du matériau pur d'origine. Les phosphores bleus et verts comportent essentiellement du zinc et du cadmium avec des activants tels que le cuivre, l'aluminium et l'argent et l'on considère généralement qu'il n'est pas rentable d'en récupérer les matériaux bruts. Les phosphores rouges comportent essentiellement des terres rares telles que l'yttrium et l'europium. Les phosphores rouges sont généralement renvoyés aux producteurs de phosphores pour qu'ils en extraient les terres rares, ce qui peut être rentable du fait que les phosphores rouges sont d'un prix environ dix fois plus élevé que les phosphores bleus et verts. Pour récupérer les terres rares, on reprécipite les oxydes d'yttrium et d'europium et on retraite les phosphores. A cause des diverses pertes lors du processus de récupération des terres rares et du coût total de retraitement des terres rares récupérées, on ne parvient à économiser qu'environ la moitié du prix d'origine des phosphores rouges.

La présente invention a pour objet un procédé permettant de récupérer économiquement des phosphores, en particulier ceux provenant du dispositif de chauffage par rayonnement et comportant une proportion élevée d'éléments organiques, aussi bien les phosphores qui sont normalement envoyés au rebut en tant que déchets, ou récupérés comme c'est le cas pour les terres rares.

Le procédé de l'invention consiste à rompre dans les matières à base de phosphores recueillies lors de la fabrication des dalles les chaînes de polymères organiques en vue de la récupération des différents phosphores. Selon un aspect préféré de l'invention on utilise des periodates tels que l'acide périodique en vue de rompre les chaînes de polymères organiques. Ces periodates peuvent être le $KIO_4$, le $NAIO_4$ ou le $HIO_4$ par exemple. Selon un autre aspect de l'invention, on ne chauffe pas préalablement les matières recueillies, en particulier celles recueillies lors du chauffage par rayonnement des dalles. Selon un autre aspect de l'invention, on utilise des oxydants tels les NaOCl, le $NH_4S_2O_8$ ou le $H_2O_2$ pour dissoudre les composés de chrome.

La présente invention sera mieux comprise à l'aide de la description détaillée d'un mode de mise en oeuvre de l'invention illustré par le dessin annexé sur lequel :

- la figure 1 est une vue en coupe longitudinale d'un tube cathodique trichrome ;
- la figure 2 est une vue partielle en coupe de la dalle du tube de la figure ;
- la figure 3 est une vue en perspective d'un dispositif de chauffage par rayonnement de dalles ;
- les figures 4 et 5 sont des organigrammes de procédés de l'art antérieur pour la récupération des phosphores rouges et bleus et verts respectivement ; et
- la figure 6 est un organigramme du procédé conforme à l'invention.

Sur la figure 1 on a représenté schématiquement un tube de télévision trichrome de structure conventionnelle. Ce tube comporte une enveloppe 1 constitué d'une dalle frontale en un matériau transparent 2, d'un col 3 et d'une partie évasée 4 interconnectant le col 3 et la dalle frontale 2. Un écran luminescent 5 est réalisé sur la surface interne de la dalle frontale 2. Trois canons à électrons 6, 7 et 8 sont montés dans le col 3 pour émettre trois faisceaux d'électrons individuels qui sont chacun contrôlés par les signaux vidéo représentatifs des couleurs verte, bleue et rouge respectivement. Des dispositifs magnétiques 9 sont prévus de manière connue autour du col pour réaliser notamment la convergence et la déviation des faisceaux d'électrons. De plus, un masque perforé 10 est prévu entre les canons à électrons 6, 7 et 8 et l'écran d'affichage, de manière bien connue.

Comme représenté en détail sur la figure 2, l'écran d'affichage 5 comporte sur la dalle 2 un ensemble de lignes ou bandes parallèles 11 à 13 de matériaux luminophores capables d'émettre respectivement les couleurs verte (V), bleue (B), rouge (R). Chaque ligne ou bande 11, 12 et 13 peut émettre une seule couleur. Chaque canon à électrons 6, 7 et 8 est dirigé sur une couleur correspondante de telle sorte que le faisceau d'électrons provenant de chacun des canons n'excite qu'une seule couleur. Lorsque le processus de dépôt, décrit plus en détail ci-dessous, des luminophores de l'écran est terminé, la dalle est maintenue dans un dispositif support approprié pour réaliser le dépôt d'une première sous-couche 14 et une seconde sous couche métallique 15 telle qu'une couche d'aluminium. Ce procédé de fabrication étant bien connu en soi ne sera pas décrit plus en détail.

On va maintenant décrire la réalisation des couches de luminophores de l'écran. A cet effet, la dalle 2 est montée sur un dispositif support approprié et une boue d'un matériau de luminophore est appliquée sur cette dalle. La boue comporte notamment le luminophore souhaité, un polymère organique tel de l'alcool

polyvinylique, un photosensibilisateur convenable tel que du dichromate d'ammonium, du dichromate de sodium, ou du dichromate de potassium et de l'eau dé-ionisée. Ces dernières années, avec les systèmes d'irradiation hautement automatisés et très sophistiqués utilisés, des additifs tels que l'éthylène glycol, le triéthylène glycol ou la méthyl-pyrrolidone sont ajoutés aux boues luminophores pour réduire le temps d'exposition. La quantité ajoutée est de 50 à 70 % en poids d'alcool polyvinylique par exemple. D'autre part tous les additifs utilisés pour réduire le temps d'exposition présentent un point d'ébullition élevé compris entre 150 et 220 °C. Ils agissent aussi comme plastifiant pour le photopolymère contenu de la bande de luminophores et le maintiennent au-dessus du point de ramolissement.

La boue est répartie sur toute la surface de la dalle qui est fixée sur un dispositif de support 16 (voir figure 3) entraîné en rotation à vitesse élevée par un moteur 17 pour éliminer l'excès de boue. Puis la boue est séchée avec des dispositifs 18 de séchage par infrarouge. Le revêtement de boue est ensuite irradié par des rayons lumineux convenables à travers un masque perforé pour enregistrer à chaque fois le dessin des bandes d'une couleur sur la couche de boue séchée. L'irradiation lumineuse amène la boue à polymériser et rend les surfaces irradiées insolubles à l'eau. Les parties de la boue non irradiées sont alors éliminées par un simple lavage de la dalle avec de l'eau. Ce lavage laisse le dessin des bandes du luminophore intact. Le panneau est alors séché pour éliminer l'eau. Cette procédure est recommencée deux fois pour déposer les deux autres bandes de luminophore. La séquence de dépôt normal pour les trois couleurs du luminophore est en général le vert, le bleu et le rouge.

Une usine de fabrication de tubes comporte en général plusieurs stations de séchage des boues. Dans chacune de ces stations les dépôts 19 résultant de l'égouttement des boues durcissent et sont partiellement brûlés lorsqu'ils sont dans la zone de rayonnement des infrarouges. Habituellement on recueille une fois par semaine, lors l'arrêt des machines pour nettoyage et maintenance, les dépôts de phosphores desséchés et brûlés. Ces dépôts portent une forte proportion de matières organiques et de chrome. Habituellement on élimine les phosphores vert et bleu du fait de la faible valeur marchande de leurs constituants. Les phosphores rouges sont renvoyés au producteur pour la récupération des terres rares.

Les phosphores recueillis dans les dispositifs de développement et dans les cuves à eau sont pompés, centrifugés et recueillis en tant que dépôt humide comportant environ 10 à 20 % d'eau, 0,1 à 0,3 % de matériaux organiques et 80 à 90 % de phosphores. Les procédés classiques de recyclage de ces phosphores sont décrits en détail ci-dessous en référence à la figure 4 pour des phosphores rouges et en référence à la figure 5 pour les phosphores verts et bleus.

Comme illustré en figure 4, on collecte tout d'abord le gâteau de phosphore dans la centrifugeuse et on le cuit à environ 450° pendant huit heures (étapes E1 et E1a).

E2 : on prépare une suspension de phosphores dans de l'eau déionisée à température ambiante, cette suspension comprend 25° de phosphores. La bouillie de phosphores est agitée vigoureusement dans un récipient tournant à environ 300 tours.minute, et on lui ajoute de l'hydroxyde de sodium et de l'hypochlorure de sodium. La concentration d'hydroxyde de sodium est maintenue à environ 0,2 à 0,5 % en poids et la concentration en hypochlorure de sodium est maintenue à environ 1 % en poids. La bouillie de phosphores est agitée pendant deux à quatre heures. Au bout de ce temps on arrête l'agitation et les phosphores se déposent et l'on décante le liquide.

E3 : on ajoute de l'eau déionisée pour obtenir une concentration en phosphores d'environ 25 % pour environ 75 % de liquide. On agite vigoureusement pendant une heure la bouillie de phosphores puis on arrête l'agitation, les phosphores se déposent et le liquide est décanté. On répète cette procédure de rinçage à l'eau déionisée trois à quatre fois.

E4 : on ajoute de l'eau déionisée pour obtenir une concentration en phosphores d'environ 25 % pour environ 75 % de liquide. On agite la bouillie de phosphores vigoureusement et l'on ajoute de l'acide chlorhydrique concentré de façon que la solution soit majoritairement acide au test de pH. On agite la bouillie de phosphores pendant une ou deux heures pour dissoudre le zinc libre, puis on stoppe l'agitation, les phosphores se déposent et le liquide est décanté.

E5 : on ajoute de l'eau déionisée pour obtenir une concentration en phosphore d'environ 25 % pour 75 % environ de liquide. On agite vigoureusement la bouillie de phosphore pendant une heure, on arrête l'agitation, les phosphores se déposent et le liquide est décanté. On répète trois à quatre fois cette procédure de rinçage.

E6 : de l'eau déionisée est ajoutée pour obtenir une concentration en phosphores d'environ 25 % pour 75 % environ en liquide. On agite vigoureusement la bouillie de phosphores et l'on ajoute une quantité appropriée de latex qui est précipitée sur les phosphores.

E7 : on arrête l'agitation, les phosphores se déposent et le liquide est décanté. On pourrait également utiliser un revêtement à base de silicate.

E8 : le revêtement de phosphore est desséché dans un four à environ 150° C pendant huit heures.

E9 : on tamise les phosphores dans un tamis à maille de 100 à 500 environ pour éliminer les agrégats.

E10 : les phosphores sont prêts pour le réemploi. Eventuellement on peut les broyer.

En référence à la figure 5 on va décrire ci-dessous le procédé de récupération de l'art antérieur pour les phosphores vert et bleu.

Les étapes E'1 à E'3 sont les mêmes que les étapes E1 à E3 pour les phosphores rouges, à la seule exception que l'on effectue le rinçage avec 1,0 % d'hydroxyde de sodium et 2 % de persulfate d'ammonium.

E'4 : on ajoute de l'eau déionisée pour obtenir une concentration en phosphores d'environ 25 % pour environ 75 % de liquide. On agite vigoureusement la bouillie de phosphores et l'on ajoute la quantité nécessaire de latex pour le bleu et une solution à base de silicate pour le vert.

E'5 : après précipitation du revêtement approprié, on arrête l'agitation, les phosphores se déposent et le liquide est décanté.

E'6 : on recueille les phosphores et on les dessèche dans un four porté à environ 150° pendant huit heures.

E'7 : on tamise les phosphores à l'aide d'un tamis à mailles à 100 à 500 environ.

E'8 : on broie éventuellement les phosphores et ils sont alors prêts à la réutilisation.

Lorsque les phosphores recueillis dans la zone de chauffage par infrarouges sont recyclés selon les procédés décrits ci-dessus en référence aux figures 4 et 5, les étapes de cuisson à 450° C pendant huit heures (E1a ou E'1a) conduisent généralement à des pertes d'efficacité d'environ 13 à 40 %. Les pertes d'efficacité constatées sont principalement dues à la contamination par des résidus à forte teneur en carbone et par du chrome. Lorsque les phosphores recueillis dans la zone de chauffage sont recyclés selon les méthodes précitées sans utiliser l'étape de chauffage à 450° C, on constate une abondante formation de mousse dans la bouillie de phosphores, et les phosphores contiennent une forte proportion de matières organiques et de chrome à la fin du processus de recyclage, les rendant inutilisables.

On va maintenant décrire ci-dessous en référence à la figure 6 le procédé conforme à l'invention pour recycler des phosphores prélevés dans la zone de chauffage.

F1 : on recueille les phosphores de chaque couleur dans la zone de chauffage ; ces phosphores comportent une forte proportion (7 à 15 % environ de matières organiques et 0,7 à 0,15 % de chrome).

Les nouvelles étapes supplémentaires de purification F2 à F10 décrites ci-dessous sont communes aux trois couleurs.

F2 : les phosphores sont mis en suspension dans une solution de $KIO_4$ ou de $HIO_4$. La composition approximative du mélange ainsi obtenu est 25 % de phosphores pour 0,5 à 1 % de $KIO_4$ et de l'eau déionisée.

F3 : on agite rapidement la bouillie de phosphores pendant au moins dix heures à une température comprise entre 50 et 100° C environ.

F4 : on arrête l'agitation, les phosphores se déposent et le liquide est décanté.

F5 : on ajoute de l'eau déionisée ainsi qu'une solution de $KIO_4$ pour obtenir un mélange d'environ 25 % de phosphores, 0,1 à 1 % de $KIO_4$ ou $HIO_4$ et de l'eau déionisée.

F6 : on agite vigoureusement la bouillie de phosphores pendant au moins dix heures à une température comprise entre 50 et 100° C.

F7 : on arrête l'agitation, les phosphores se déposent et le liquide est décanté.

F8 : on ajoute de l'eau déionisée pour obtenir un mélange comportant environ 25 % de phosphores et 75 % de liquide.

F9 : on agite la bouillie de phosphores pendant au moins une demi-heure à une température comprise entre 50 et 100° C.

F10 : on arrête l'agitation, les phosphores se déposent et le liquide est décanté.

On répète les étapes F8 à F10 quatre fois.

Dans le cas des phosphores rouges, on met en oeuvre les étapes E2 à E10 de la figure 4, tandis que pour les phosphores bleus et verts on met en oeuvre les étapes E'2 à E'8 de la figure 5.

On a consigné dans le tableau 1 de la figure 7 les résultats que permet d'obtenir le procédé de la présente invention..

Le lavage des boues à l'aide d'un periodate tel que $KIO_4$ ou $HIO_4$ permet de rompre les liaisons transversales de l'alcool polyvinylique et réduit sa viscosité. Le procédé de l'invention présente une grande efficacité d'élimination de fortes contaminations en matières organiques telles que l'alcool polyvinylique se trouvant dans les phosphores recueillis dans la zone de chauffage, et ce sans provoquer de moussage trop fort. D'autres oxydants que $H_2O_2$ provoquent une formation excessive de mousse et ne permettent pas d'éliminer de façon efficace la forte contamination en matières organiques.

L'addition de periodates tel que l'acide periodique aux bouillies de phosphores à forte teneur en alcool et en chrome décompose sélectivement les chaînes d'alcool polyvinylique en cassant les liaisons de glycol 1-2 et réduit la viscosité de l'alcool polyvinylique en le solubilisant dans l'eau :

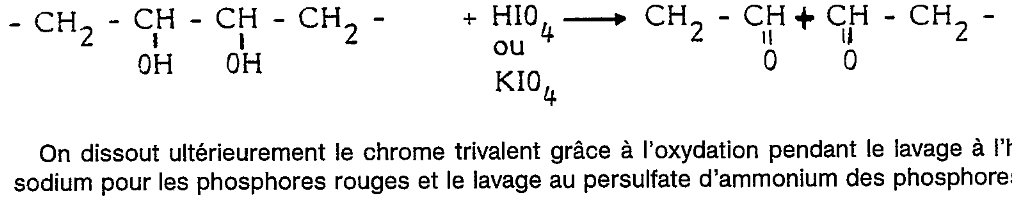

On dissout ultérieurement le chrome trivalent grâce à l'oxydation pendant le lavage à l'hypochlorure de sodium pour les phosphores rouges et le lavage au persulfate d'ammonium des phosphores bleus et verts.

**Revendications**

1. Procédé de récupération de phosphores de tubes de télévision en couleurs caractérisé par le fait qu'il consiste à rompre, dans les matières à base de phosphores recueillies lors de la fabrication des dalles, avant le lavage de ces matières, les chaînes de polymères organiques tels que l'alcool polyvinylique.

2. Procédé selon la revendication 1, caractérisé par le fait que l'on rompt les chaînes de polymères organiques à l'aide d'un periodate.

3. Procédé selon la revendication 2, caractérisé par le fait que le periodate est un acide periodique tel $KIO_4$, $NaIO_4$ ou $HIO_4$.

4. Procédé selon l'une des revendications précédentes, caractérisé par le fait que l'on ne chauffe pas à forte température les matières recueillies en vu d'en éliminer les polymères organiques.

5. Procédé selon l'une des revendications précédentes, caractérisé par le fait que l'on utilise des agents oxydants pour dissoudre les composés de chrome présents dans les matières recueillies.

6. Procédé selon la revendication 5, caractérisé par le fait que les agents oxydants sont choisis parmi l'hypochlorure de sodium, le persulfate d'ammonium ou l'eau oxygénée.

FIG. 1

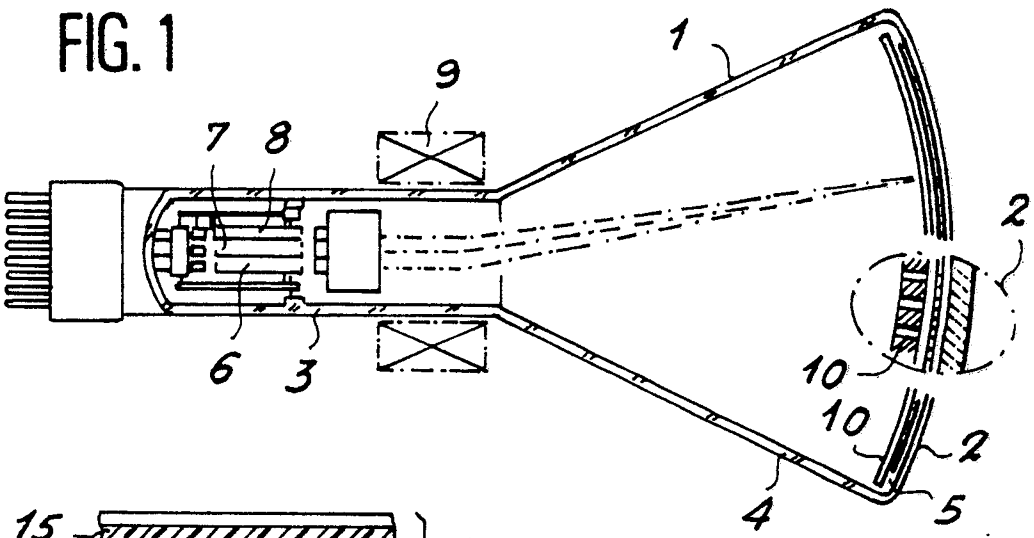


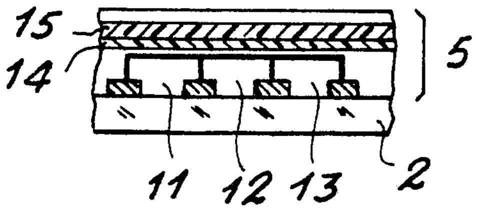


FIG. 2

FIG. 3

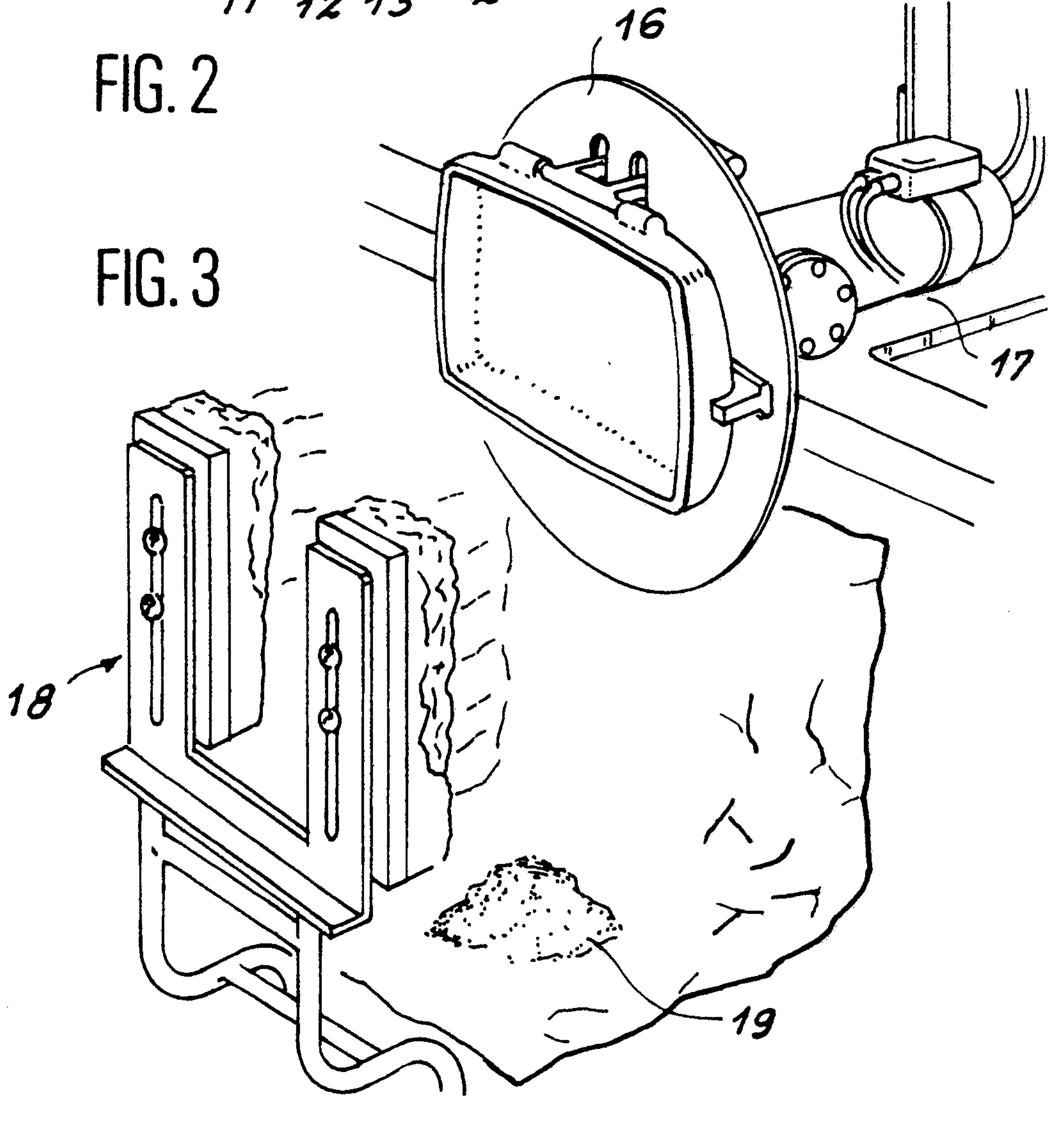

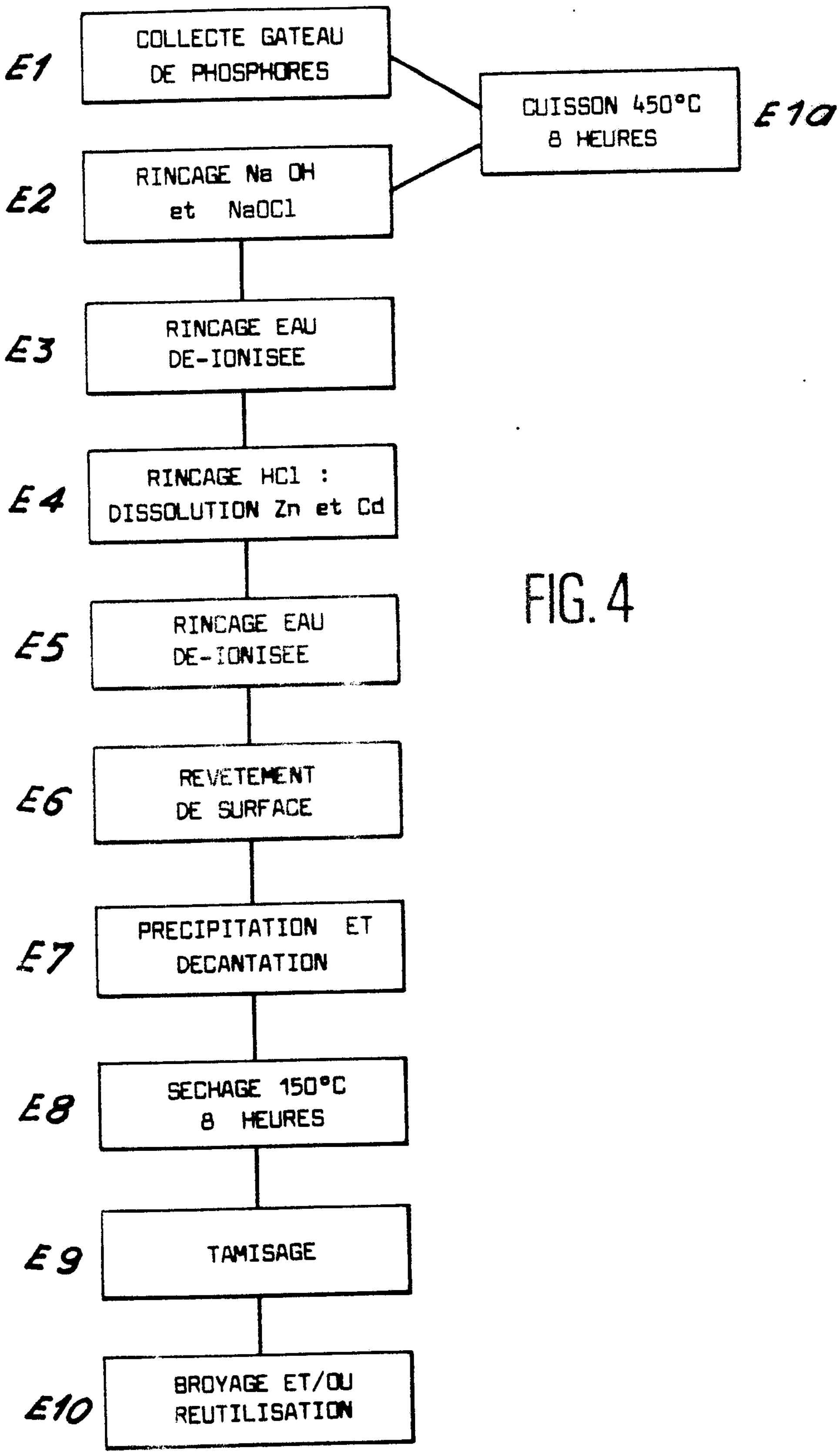
E1
COLLECTE GATEAU DE PHOSPHORES
E1a
CUISSON 450°C 8 HEURES
E2
RINCAGE Na OH et NaOCl
E3
RINCAGE EAU DE-IONISEE
E4
RINCAGE HCl : DISSOLUTION Zn et Cd
E5
RINCAGE EAU DE-IONISEE
E6
REVETEMENT DE SURFACE
E7
PRECIPITATION ET DECANTATION
E8
SECHAGE 150°C 8 HEURES
E9
TAMISAGE
E10
BROYAGE ET/OU REUTILISATION

FIG. 4

FIG. 5

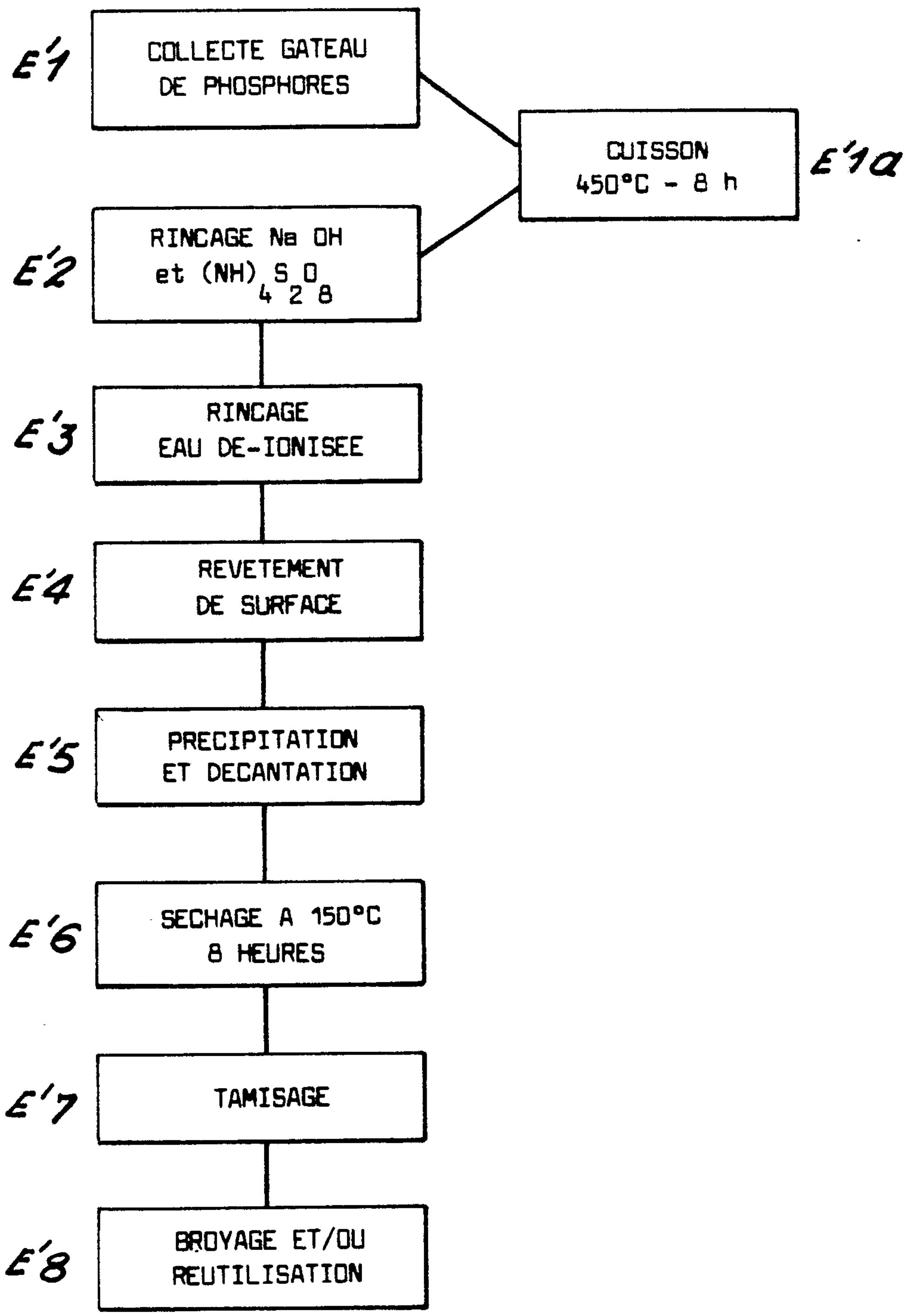
E'1
COLLECTE GATEAU DE PHOSPHORES
CUISSON 450°C - 8 h
E'1a
E'2
RINCAGE Na OH et $(NH)_4S_2O_8$
E'3
RINCAGE EAU DE-IONISEE
E'4
REVETEMENT DE SURFACE
E'5
PRECIPITATION ET DECANTATION
E'6
SECHAGE A 150°C 8 HEURES
E'7
TAMISAGE
E'8
BROYAGE ET/OU REUTILISATION

FIG. 6

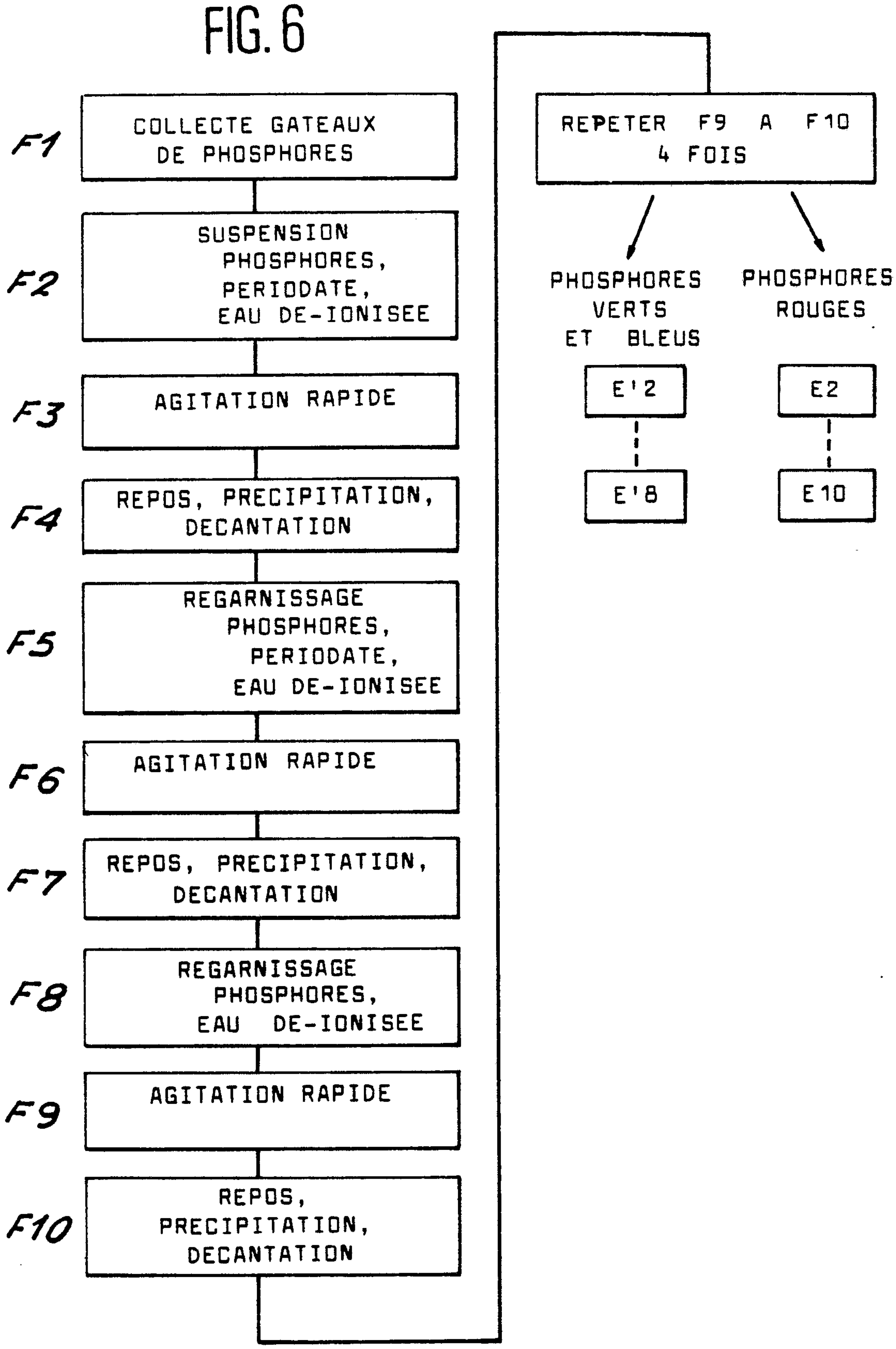
F1
COLLECTE GATEAUX DE PHOSPHORES
F2
SUSPENSION PHOSPHORES, PERIODATE, EAU DE-IONISEE
F3
AGITATION RAPIDE
F4
REPOS, PRECIPITATION, DECANTATION
F5
REGARNISSAGE PHOSPHORES, PERIODATE, EAU DE-IONISEE
F6
AGITATION RAPIDE
F7
REPOS, PRECIPITATION, DECANTATION
F8
REGARNISSAGE PHOSPHORES, EAU DE-IONISEE
F9
AGITATION RAPIDE
F10
REPOS, PRECIPITATION, DECANTATION
REPETER F9 A F10 4 FOIS
PHOSPHORES VERTS ET BLEUS
PHOSPHORES ROUGES
E'2
E'8
E2
E10

Office européen des brevets

# RAPPORT DE RECHERCHE EUROPEENNE

Numero de la demande

EP 89 40 1062

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 86, no. 22, 30 mai 1977, page 605, résumé no. 164298e, Columbus, Ohio, US; & JP-A-76 131 486 (MITSUBISHI ELECTRIC CORP.) 15-11-1976 * Résumé * ----- | 1,4-6 | C 09 K 11/01 |
| | | | **DOMAINES TECHNIQUES RECHERCHES (Int. Cl.4)** |
| | | | C 09 K 11 |

Le présent rapport a été établi pour toutes les revendications

| Lieu de la recherche | Date d'achèvement de la recherche | Examinateur |
|---|---|---|
| LA HAYE | 26-07-1989 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)